(19) Europäisches Patentamt
European Patent Office
Office européen des brevets

(11) **EP 3 072 202 B1**

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **14750186.0**

(22) Anmeldetag: **06.08.2014**

(51) Internationale Patentklassifikation (IPC):
**H02J 3/38** *(2006.01)*  **H02J 7/34** *(2006.01)*
**H02J 15/00** *(2006.01)*

(52) Gemeinsame Patentklassifikation (CPC):
**H02J 7/34; H02J 3/381; H02J 3/382;** H02J 15/00;
H02J 2300/20; Y02B 10/10; Y02E 10/56

(86) Internationale Anmeldenummer:
**PCT/EP2014/066890**

(87) Internationale Veröffentlichungsnummer:
**WO 2015/032568 (12.03.2015 Gazette 2015/10)**

(54) **VERFAHREN UND VORRICHTUNG ZUR EFFIZIENZGESTEUERTEN BETRIEBSFÜHRUNG FÜR EIN SPEICHERSYSTEM FÜR EIN FOTOVOLTAIKSYSTEM**

METHOD AND DEVICE FOR EFFICIENCY-CONTROLLED OPERATIONAL MANAGEMENT FOR A STORAGE SYSTEM FOR A PHOTOVOLTAIC SYSTEM

PROCÉDÉ ET DISPOSITIF PERMETTANT LA GESTION À RENDEMENT CONTRÔLÉ D'UN SYSTÈME D'ACCUMULATION POUR UN SYSTÈME PHOTOVOLTAÏQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2013 DE 102013217573**

(43) Veröffentlichungstag der Anmeldung:
**28.09.2016 Patentblatt 2016/39**

(73) Patentinhaber: **Robert Bosch GmbH**
**70442 Stuttgart (DE)**

(72) Erfinder: **SCHMIEGEL, Armin Uwe**
**22609 Hamburg (DE)**

(56) Entgegenhaltungen:
WO-A1-2013/106906    US-A1- 2010 179 704
US-A1- 2010 264 739    US-A1- 2012 323 386

**Beschreibung**

Stand der Technik

Die vorliegende Erfindung bezieht sich auf ein Verfahren zur effizienzgesteuerten Betriebsführung für ein Speichersystem für ein Fotovoltaiksystem, auf eine entsprechende Vorrichtung zur effizienzgesteuerten Betriebsführung für ein Speichersystem für ein Fotovoltaiksystem, auf ein entsprechendes Fotovoltaiksystem sowie auf ein entsprechendes Computerprogrammprodukt.

Aktuell gibt es zwei Produktgruppen von Fotovoltaik-Speichersystemen: DCgekoppelte Speichersysteme oder AC-gekoppelte Speichersysteme. Alternative Topologien werden diskutiert. Diese Systeme speichern überschüssigen Solarstrom in eine Batterie ein. Die Batterie ist dabei in unterschiedlichen Verhältnissen in Reihe und/oder parallel geschaltet. Bei DC-gekoppelten Systemen bevorzugt man hohe Batteriespannungen, wodurch alle Module eines Speicherblocks in Reihe geschaltet sind, sodass die Gesamtbatteriespannung möglichst nah an der DC-Zwischenkreisspannung liegt. Bei AC-Systemen geht man ebenso vor, wobei man hier vermehrt Kombinationen aus parallel geschalteten Blöcken, die aus in Serie geschalteten Blöcken bestehen, verwendet.

Die grundlegende Funktionsweise ist in allen Fotovoltaik-Speichersystemen die gleiche. Wird Solarstrom produziert, werden zunächst die Verbraucher im Haushalt versorgt. Sobald die Fotovoltaik-Anlage einen Überschuss generiert, wird dieser dazu genutzt, die Batterie zu laden. Gegen Nachmittag ist die Batterie voll und weitere Überschüsse werden ins Netz eingespeist. Am Abend, wenn die Fotovoltaik-Leistung geringer ist, als der Haushaltsverbrauch, wird die Batterie entladen und dient so lange zur Versorgung der Lasten, bis die Batterie leer ist. Dann wird Strom aus dem Netz bezogen, bis am nächsten Morgen die Sonne wieder genug Strom produziert. Die gängigen Betriebsführungen berücksichtigen weder Systemineffizienzen noch eventuelle Änderungen am Stromnetz oder am Markt.

In Proceedings of the 16th Kassel symposium energy systems technology, 2011, beschreiben A. U. Schmiegel und A. Linhart eine wirtschaftlich optimierte Netzeinspeisung von lokalgespeichertem Strom.

Die US 2010 179704 A1 offenbart ein Verfahren zur Optimierung eines Stromnetzes.

Offenbarung der Erfindung

Vor diesem Hintergrund wird mit der vorliegenden Erfindung ein Verfahren zur effizienzgesteuerten Betriebsführung für ein Speichersystem für ein Fotovoltaiksystem, weiterhin eine Vorrichtung zur effizienzgesteuerten Betriebsführung für ein Speichersystem für ein, die dieses Verfahren verwendet, weiterhin ein entsprechendes Fotovoltaiksystem sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Ein Fotovoltaiksystem produziert elektrische Energie in Abhängigkeit von der Sonneneinstrahlung. Der Verbrauch der elektrischen Energie ist jedoch meist nicht direkt abhängig von der Sonneneinstrahlung. Um dies auszugleichen, kann das Fotovoltaiksystem über ein Energie-Speichersystem beziehungsweise eine Batterie verfügen. Durch das Speichersystem kann zu Zeiten hoher Sonneneinstrahlung und geringem Verbrauch zu viel zur Verfügung stehende elektrische Energie zwischengespeichert werden. Neben der Versorgung eines Hausnetzes mit elektrischer Energie durch das Fotovoltaiksystem kann überschüssiger Strom in das Stromnetz eingespeist werden. Dabei steht der Betreiber des Stromnetzes vor der Herausforderung, ein stabiles Stromnetz aufzubauen, welches genügend Energie zu jedem Zeitpunkt zur Verfügung stellt. Um dies zu gewährleisten, kann ein Leistungsbedarfsparameter dem Fotovoltaiksystem zur Verfügung gestellt werden, um die Netzeinspeisung bedarfsorientiert zu steuern. Bei einer effizienzgesteuerten Betriebsführung des Fotovoltaiksystems bzw. des Speichersystems des Fotovoltaiksystems können verschiedene Betriebsmodi bestimmt werden, um daraus den für das Stromnetz günstigen Betriebsmodus zu wählen. Unter einem Betriebsmodus können hierbei die verschiedenen Leistungsflüsse zwischen Solarmodul, Speichersystem, Hausnetz und Stromnetz verstanden werden. Dabei können die aktuellen Produktionswerte des Solargenerators und Verbrauchswerte des Hausnetzes betrachtet werden und unter Verwendung des Leistungsbedarfsparameters und eines Erwartungswertes für die Energieflüsse ein optimierter Energiefluss bestimmt werden, um eine energieeffiziente Betriebsführung zu schaffen. In einer Ausführungsform kann dies zu einem Vermindern beziehungsweise Optimieren der Verlustleistung führen.

Es wird ein Verfahren zur energieeffizienten Betriebsführung für ein Speichersystem für ein Fotovoltaiksystem vorgestellt, wobei das Fotovoltaiksystem als Komponenten zumindest einen Solargenerator, das Speichersystem, ein Energie-Management-System sowie einen Haushaltsanschluss und einen Netzanschluss umfasst, wobei das Verfahren die folgenden Schritte aufweist:

Einlesen von aktuellen Kenndaten des Fotovoltaiksystems, wobei die aktuellen Kenndaten Produktionswerte und/oder Verbrauchswerte und/oder einen Ladezustand des Speichersystems in einem aktuellen Zeitintervall repräsentieren;

Bestimmen einer Vielzahl möglicher Energieflüsse zwischen den Komponenten des Fotovoltaiksystems für das aktuelle Zeitintervall unter Verwendung der aktuellen Kenndaten und Bestimmen eines Erwartungswertes je Energiefluss der Vielzahl möglicher Energieflüsse unter Verwendung eines Leistungsbedarfsparameters und der Vielzahl möglicher Energieflüsse; und

Wählen eines Energieflusses aus der Vielzahl möglicher Energieflüsse für das aktuelle Zeitintervall, wobei der Erwartungswert für das aktuelle Zeitintervall maximal ist, wobei der Energiefluss die effizienzgesteuerte Betriebsführung bestimmt.

Unter einem Fotovoltaiksystem kann ein System verstanden werden, welches Lichtenergie in elektrische Energie wandelt. Das Fotovoltaiksystem kann einen Solargenerator, ein Speichersystem sowie ein Energie-Management-System umfassen. Unter dem Solargenerator kann eine Solarzelle, ein Fotovoltaik-Generator oder Solarmodul verstanden werden. Dabei kann unter dem Speichersystem ein Energie-Speichersystem, eine Batterie oder ein Akkumulator verstanden werden. Über den Haushaltsanschluss kann ein Haushalt mit elektrischer Energie versorgt werden. Über den Netzanschluss kann das Fotovoltaiksystem mit einem öffentlichen oder globalen Stromnetz verbunden werden. Über den Netzanschluss kann das Fotovoltaiksystem elektrische Energie in das öffentliche Stromnetz einspeisen oder von dort beziehen. Das Energie-Management-System kann ausgebildet sein, die Leistungsflüsse oder Energieflüsse zwischen den Komponenten des Fotovoltaiksystems zu steuern. Unter den Produktionsdaten kann eine Information oder ein Signal verstanden werden, welches eine von dem Solargenerator erzeugte elektrische Energie in einem Zeitintervall repräsentiert. Somit kann unter den Produktionswerten eine von dem Solargenerator bereitgestellte elektrische Leistung verstanden werden. Unter Verbrauchswerten kann eine in einem Zeitintervall verbrauchte elektrische Energie des an das Fotovoltaiksystem über den Haushaltsanschluss angeschlossenen Haushalts verstanden werden. Der Ladezustand des Speichersystems kann in einem Bereich zwischen null und der maximalen Kapazität des Speichersystems variieren. Unter dem aktuellen Zeitintervall kann eine Zeitspanne innerhalb eines Zeitraums zwischen dem aktuellen Zeitpunkt und einem Zeitpunkt in der Zukunft der zwischen wenigen Stunden und ein, zwei oder drei oder mehr Tagen liegen kann verstanden werden. Alternativ kann unter dem aktuellen Zeitintervall ein Zeitraum zwischen einem Zeitpunkt in der Vergangenheit und einem Zeitpunkt in der Zukunft verstanden werden. Unter einer effizienzgesteuerten Betriebsführung kann eine bedarfsorientierte Betriebsführung oder eine auf eine globale Netzstabilität optimierte beziehungsweise angepasste Betriebsführung verstanden werden. Unter einer effizienzgesteuerten Betriebsführung kann eine Steuerung der Energieflüsse zwischen den Komponenten des Fotovoltaiksystems verstanden werden. Dabei kann eine Verlustleistung vermieden oder vermindert werden. Dabei kann unter einem Leistungsbedarfsparameter eine Kennzahl verstanden werden. Der Leistungsbedarfsparameter kann in unterschiedlichen Zeitintervallen variieren. Dabei kann der Leistungsbedarfsparameter an ein Bezahlsystem bzw. an einen monetären Ertrag als Kenngröße gekoppelt sein. Unter einem Erwartungswert kann eine Kenngröße verstanden werden, die eine elektrische Energie oder eine elektrische Leistung mit einem Leistungsbedarfsparameter kombiniert.

In einer Ausführungsform können die Kenndaten eine am Solargenerator abrufbare Leistung $P_t$ und gleichzeitig oder alternativ eine in dem Speichersystem gespeicherte Leistung und gleichzeitig oder alternativ von der Batterie abrufbare Leitung $S_t$ und gleichzeitig oder alternativ eine zur Versorgung der Verbraucher benötigte Leistung $L_t$ und gleichzeitig oder alternativ eine Leistung $G_t$, die in ein Netz eingespeist oder aus dem Netz abgerufen wird, repräsentieren, wobei die aktuellen Kenndaten Daten zu einem Zeitintervall repräsentieren. Durch die Kenndaten kann das Fotovoltaiksystem einfach beschrieben werden.

Ferner können im Schritt des Bestimmens die Vielzahl möglicher Energieflüsse unter Verwendung je eines einem Energiefluss zuordenbaren Wirkungsgrades bestimmt wird. Der Wirkungsgrad der Energieübertragung zwischen den einzelnen Komponenten des Fotovoltaiksystems bzw. der einzelnen Komponenten des Fotovoltaiksystems selbst kann die Menge der bereitgestellten elektrischen Energie beeinflussen. Dabei kann elektrische Energie in Wärme gewandelt werden. Der Übertragung von Leistung zwischen den einzelnen Komponenten des Fotovoltaiksystems bzw. einzelnen Komponenten des Fotovoltaiksystems kann ein Wirkungsgrad zugeordnet werden. Das Speichersystem kann über die Zeit die darin gespeicherte Energie verlieren oder verringern. Ein Wirkungsgrad kann diese Funktion über die Zeit abbilden.

In einem Schritt des Ausgebens kann ein Steuersignal ausgegeben werden. Dabei kann das Steuersignal ausgebildet sein, den Energiefluss beziehungsweise den Leistungsfluss zwischen den Komponenten des Fotovoltaiksystems entsprechend dem im Schritt des Wählens gewählten Energieflusses zu steuern. Über das Steuersignal kann der Energiefluss beziehungsweise die Energieflüsse zwischen den Komponenten des Fotovoltaiksystems gesteuert werden. Das Steuersignal kann die Verteilung der elektrischen Leistung beziehungsweise der elektrischen Energie in dem Fotovoltaiksystem steuern. Somit kann das Steuersignal geeignet sein, die entsprechende Betriebsführung zu implementieren oder das Fotovoltaiksystem entsprechend der energieeffizienten Betriebsführung zu steuern.

Günstig ist es auch, wenn im Schritt des Bestimmens der dem Ladezustand des Speichersystems in einem aktuellen Zeitintervall zugeordnete Erwartungswert einem negativen Erwartungswert für ein zukünftiges Zeitintervall entspricht. Die in dem Speichersystem zwischengespeicherte elektrische Energie kann zur Berücksichtigung bei einer energieeffizienten Betriebsführung als vermiedener Strombedarf in einem zukünftigen Zeitintervall betrachtet werden. Für die Bewertung der Energieflüsse zum Speichersystem und von dem Speichersystem ist es von Vorteil, wenn dem Speichersystem ein Erwartungswert unter Verwendung des Leistungsbedarfsparameters zugeordnet ist. Wenn davon ausgegangen wird, dass das Speichersystem ausschließlich genutzt wird, um Lasten an dem Haushaltsanschluss zu decken, kann der Erwartungswert der in dem Speichersystem gespeicherten Energie einem negativen Erwartungswert entsprechen oder, wenn der Leistungsbedarfsparameter als eine monetäre Größe betrachtet wird, den vermiedenen Stromkosten entsprechen.

Ferner kann im Schritt des Wählens des Energieflusses und/oder der effizienzgesteuerten Betriebsführung ein Energiefluss zwischen den Komponenten des Fotovoltaiksystems für das aktuelle Zeitintervall bestimmt werden. Die effizienzgesteuerte Betriebsführung kann den Energiefluss von dem Solargenerator zu dem Haushaltsanschluss, zu dem Netzanschluss sowie zu dem Speichersystem bestimmen. Die effizienzgesteuerte Betriebsführung kann den Energiefluss von dem Speichersystem zu dem Haushaltsanschluss sowie zu dem Netzanschluss bestimmen. Die effizienzgesteuerte Betriebsführung kann den Energiefluss von dem Netzanschluss zu dem Haushaltsanschluss sowie zu dem Speichersystem bestimmen. Die durch die effizienzgesteuerte Betriebsführung bestimmten Energieflüsse sorgen für elektrische Energie für elektrische Verbraucher am Haushaltsanschluss sowie für ein stabiles Stromnetz am Netzanschluss. Hierzu wird elektrische Energie in dem Speichersystem gepuffert. Unter einem stabilen Stromnetz kann dabei eine Frequenzhaltung verstanden werden. Dabei kann die Frequenzhaltung des Stromnetzes unter Verwendung des Leistungsbedarfsparameters verbessert werden.

Die vorliegende Erfindung schafft ferner eine Vorrichtung zur effizienzgesteuerten Betriebsführung für ein Speichersystem für ein Fotovoltaiksystem, die ausgebildet ist, um die Schritte einer Variante eines hier vorgestellten Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignal verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird ein Fotovoltaiksystem mit einem Solargenerator und/oder einem Speichersystem und/oder einem Energie-Management-System und einer Vorrichtung zur effizienzgesteuerten Betriebsführung für das Speichersystem vorgestellt.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:

Fig. 1 eine schematische Darstellung eines Fotovoltaiksystems gemäß einem Ausführungsbeispiel der vorliegenden Erfindung;

Fig. 2 eine schematische Darstellung eines Fotovoltaiksystems mit einem Speichersystem als DC-System;

Fig. 3a und 3b eine schematische Darstellung eines Fotovoltaikspeichersystems als AC-System;

Fig. 4 eine schematische Darstellung eines Fotovoltaikspeichersystems als DC-System;

Fig. 5a bis 5d eine schematische Darstellung einer Funktionsweise eines Fotovoltaiksystems gemäß einem Ausführungsbeispiel der vorliegenden Erfindung;

Fig. 6 eine Darstellung eines Fotovoltaik-Speichersystems mit DC-Topologie gemäß einem Ausführungsbeispiel der vorliegenden Erfindung;

Fig. 7 eine schematische Darstellung von Leistungsflüssen und Energieflüssen eines Fotovoltaik-Speichersystems gemäß einem Ausführungsbeispiel der vorliegenden Erfindung;

| Fig. 8 | eine Darstellung von Kurvenverläufen von Energieflüssen bei Verwendung einer effizienzgesteuerten Betriebsführung gemäß einem Ausführungsbeispiel der vorliegenden Erfindung; |
| Fig. 9 | eine Darstellung von Kurvenverläufen von Energieflüssen bei Verwendung einer effizienzgesteuerten Betriebsführung gemäß einem Ausführungsbeispiel der vorliegenden Erfindung; |
| Fig. 10 | ein Ablaufdiagramm eines Verfahrens gemäß einem Ausführungsbeispiel der vorliegenden Erfindung; und |
| Fig. 11 | ein Blockschaltbild einer Vorrichtung gemäß einem Ausführungsbeispiel der vorliegenden Erfindung. |

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

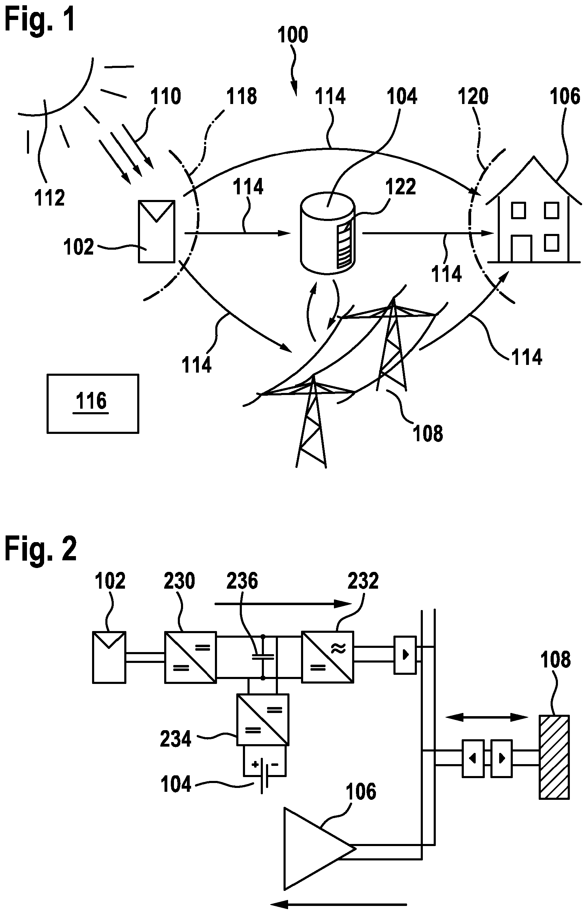

Fig. 1 zeigt eine schematische Darstellung eines Fotovoltaiksystems 100 gemäß einem Ausführungsbeispiel der vorliegenden Erfindung. Das Fotovoltaiksystem 100 umfasst zumindest einen Solargenerator 102, ein Speichersystem 104, einen Haushaltsanschluss 106 mit nicht dargestellten elektrischen Verbrauchern sowie einen Netzanschluss 108 zum Anschluss an ein globales Stromnetz. Der Solargenerator 102 ist ausgebildet, Licht 110 in der Sonne 112 in elektrische Energie zu wandeln und diese elektrische Energie im Fotovoltaiksystem 100 bereitzustellen. Pfeile zeigen einen möglichen Energiefluss 114 oder Leistungsfluss 114 zwischen den genannten Komponenten des Fotovoltaiksystems 100. Der Solargenerator 102 ist verbunden mit dem Haushaltsanschluss 106, dem Netzanschluss 108 sowie dem Speichersystem 104; somit ist ein Leistungsfluss 114 vom Solargenerator 102 zu dem Speichersystem 104, zu dem Haushaltsanschluss 106 sowie dem Netzanschluss 108 vorgesehen bzw. möglich. Das Speichersystem 104 ist weiterhin verbunden mit dem Haushaltsanschluss 106 sowie dem Netzanschluss 108. Das Speichersystem 104 ist ausgebildet, vom Solargenerator 102 oder über den Netzanschluss 108 bereitgestellte elektrische Energie zu speichern sowie an den Haushaltsanschluss 106 sowie den Netzanschluss 108 gespeicherte elektrische Energie abzugeben. Der Netzanschluss 108 ist weiterhin verbunden mit dem Haushaltsanschluss 106 und ausgebildet einen Leistungsfluss 114 vom Netzanschluss 108 zum Haushaltsanschluss 106 zu ermöglichen. Das Fotovoltaiksystem 100 weist weiterhin ein Energie-Management-System 116 auf, welches ausgebildet ist, die Leistungsflüsse 114 zwischen den Komponenten des Fotovoltaiksystems 100 zu steuern. Weiterhin ist das Energie-Management-System 116 ausgebildet, die Produktionsdaten 118 des Solargenerators 102, die Verbrauchswerte 120 am Haushaltsanschluss 106 sowie den Ladezustand 122 des Speichersystems 104 zu überwachen.

Fig. 2 zeigt eine schematische Darstellung eines Fotovoltaiksystems 100 mit einem Speichersystem 104. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, einen Fotovoltaik-Laderegler 230, einen Wechselrichter 232, einen Batterieladeregler 234 sowie ein Speichersystem 104. Der Solargenerator 102 ist über den Fotovoltaik-Laderegler 230 mit dem Wechselrichter 232 verbunden. Das über den Batterieladeregler 234 angebundene Speichersystem 104 greift in der Verbindung zwischen dem Fotovoltaik-Laderegler 230 und dem Wechselrichter 232 in das System ein. Zwischen den beiden Verbindungsleitungen zwischen dem Fotovoltaik-Laderegler 230 und dem Wechselrichter 232 ist ein Kondensator 236 angeordnet. Der Wechselrichter 232 ist über einen Übergabepunkt mit dem Haushaltsanschluss 106 sowie dem Netzanschluss 108 verbunden, wobei auch der Netzanschluss 108 über einen dedizierten Übergabepunkt angebunden ist.

Der Fotovoltaik-Laderegler 230 kann als ein MPP-Tracker verstanden werden, der ausgebildet ist, die Belastung des Solargenerators 102 für optimale Energieausbeute zu optimieren. Der Fotovoltaik-Laderegler 230 ist ausgebildet, den Solargenerator 102 im Leistungsmaximum oder Maximum Power Point zu betreiben. Unter einem Solargenerator 102 kann ein Solarmodul 102 oder eine Solarzelle 102 verstanden werden.

In dem in Fig. 2 dargestellten Ausführungsbeispiel fließt Strom von dem Solarmodul 102 über den Fotovoltaik-Laderegler 230 und dem Wechselrichter 232 in Richtung des Haushaltsanschlusses 106 sowie des Netzanschlusses 108. Somit kann der Haushaltsanschluss 106 von dem Solarmodul 102 bzw. dem Speichersystem 104 mit Strom versorgt werden sowie Strom über den Netzanschluss 108 eingespeist werden. Gleichzeitig oder alternativ kann der Haushalt Strom über den Netzanschluss 108 beziehen.

Gezeigt wird ein Betrieb eines AC-Systems. Der Wechselrichter 232 wird entsprechend der im Haushalt 106 vorhandenen Lasten geregelt und speist nur so viel Leistung ins Netz, wie aktuell verbraucht wird.

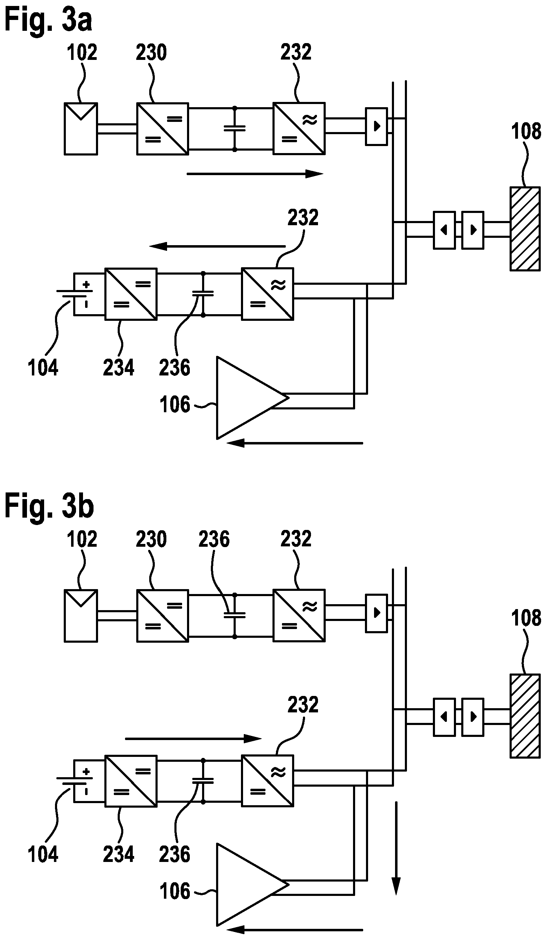

Fig. 3a und Fig. 3b zeigen eine schematische Darstellung eines Fotovoltaikspeichersystems 100 als AC-System. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, einen Fotovoltaik-Laderegler 230, zwei Wechselrichter 232, einen Batterieladeregler 234 sowie ein Speichersystem 104. Der Solargenerator 102 ist über den Fotovoltaik-Laderegler 230 mit dem ersten der zwei Wechselrichter 232 verbunden. Das Speichersystem 104 ist über den Batterieladeregler 234 mit dem zweiten der zwei Wechselrichter 232 verbunden. Die zwei Wechselrichter 232 der Haushaltsanschluss 106 sowie der Netzanschluss 108 sind miteinander verbunden. In Fig. 3a zeigen Pfeile den Zustand des Ladens des Fotovoltaiksystems 100 an. Im Vergleich dazu zeigen in Fig. 3b Pfeile den Eigenverbrauch bei einem Nulleinspeiser an. In Fig. 3a liefert der Solargenerator 102 Strom, welcher zum Speichersystem 104 sowie zum Haushaltsanschluss 106 geleitet wird. In Fig. 3b wird der Haushaltsanschluss 106 über das Speichersystem 104 mit Strom versorgt.

Der Eigenverbrauch erfolgt über die Be- und Entladung der Batterie unabhängig davon, ob im Haushalt Strom genutzt wird oder nicht. Die Entladung der Batterie erfolgt bei einem Nulleinspeiser darüber, dass Verbraucher direkt vom Speichersystem aus versorgt werden. Eine Auslegung als Volleinspeiser ist ebenso möglich. Dann ist der Betrieb analog zum DC-System zu sehen.

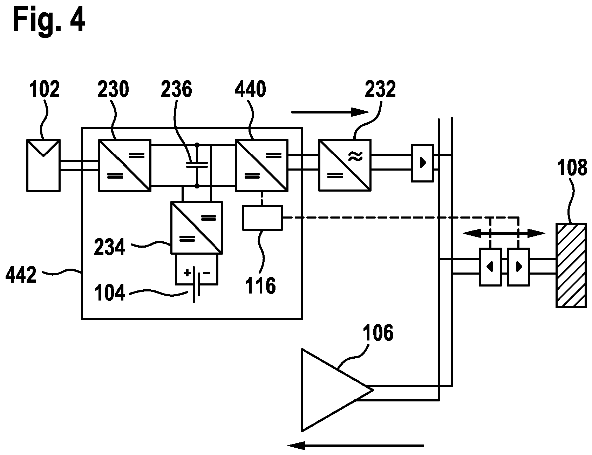

Fig. 4 zeigt eine schematische Darstellung eines Fotovoltaikspeichersystems als DC-System. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, einen Fotovoltaik-Laderegler 230, einen Wechselrichter 232, einen Batterieladeregler 234, ein Speichersystem 104 sowie einen virtuellen Solargenerator 440 bzw. virtuellen Fotovoltaik-Generator 440. Der Fotovoltaik-Laderegler 230 bildet zusammen mit dem virtuellen Solargenerator 440 sowie dem Batterieladeregler 234 dem Speichersystem 104 sowie einem Energie-Management-System 116 ein PV-DC-System 442. Der virtuelle Solargenerator 440 ist vor den Wechselrichter 232 geschaltet und wie der Übergabepunkt zum Netzanschluss 108 mit dem Energie-Management-System 116 verbunden.

Mit anderen Worten zeigt Fig. 4 eine schematische Darstellung eine PV-DC-Systems 442. Das System 442 wird zwischen einem Wechselrichter 232 und einer PV-Anlage bzw. einem Solargenerator 102 installiert. Das System 442 verfügt über einen eigenen MPP-Tracker 230, um den optimalen Arbeitspunkt des Solargenerators 102 einzustellen. Der Batterieladeregler 234 dient zur Be- und Entladung der Batterie 104. Der virtuelle Fotovoltaik-Generator 440, auch kürzer als virtueller PV-Generator 440 bezeichnet, erzeugt eine UI-Kennlinie, die einem PV-Generator mit einer Zielleistung entspricht, sodass der ursprüngliche Wechselrichter sich auf die Zielleistung einregelt.

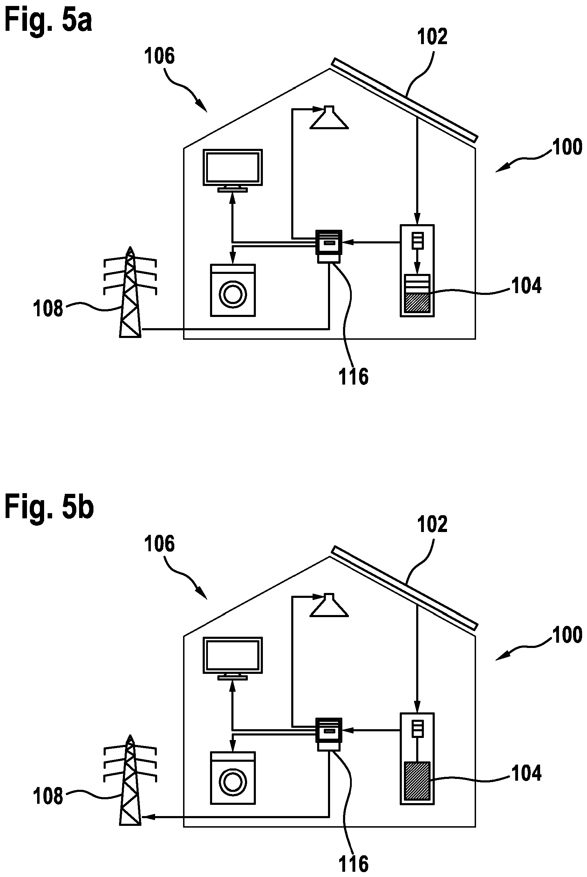

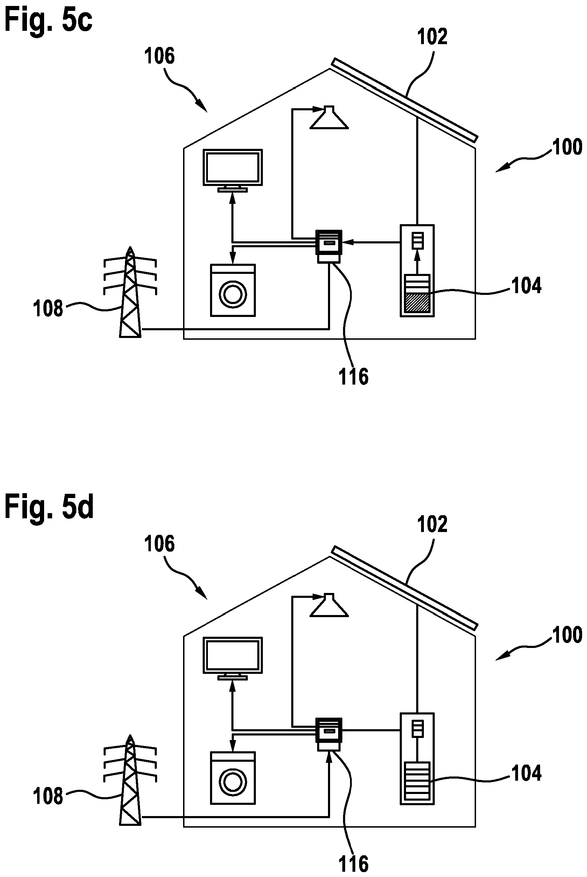

Fig. 5a bis 5d zeigen eine schematische Darstellung einer Funktionsweise eines Fotovoltaiksystems 100 gemäß einem Ausführungsbeispiel der vorliegenden Erfindung. Bei dem Fotovoltaiksystem 100 kann es sich um ein Ausführungsbeispiel des in Fig. 1 gezeigten Fotovoltaiksystems 100 handeln. Auf dem Dach eines Hauses ist ein Solargenerator 102 angeordnet. Ein Energie-Management-System 116 koppelt das Fotovoltaiksystem 100 den Haushaltsanschluss 106 mit seinen elektrischen Verbrauchern sowie den Netzanschluss 108 und steuert dabei das Fotovoltaiksystem 100 mit dem dort angeordneten Speichersystem 104. die Figuren 5a bis 5d zeigen die Funktionsweise zu verschiedenen Tageszeiten bzw. nachts. So zeigen beispielhaft Fig. 5a die Funktionsweise am Vormittag, Fig. 5b die Funktionsweise am Nachmittag, Fig. 5c die Funktionsweise am Abend sowie Fig. 5d die Funktionsweise während der Nacht. In Fig. 5a wird die im Fotovoltaik Generator 102 produzierte Energie vormittags zur Optimierung des Eigenverbrauchs genutzt. Überschüssige Energie wird zum Aufladen der integrierten Lithium-Ionen-Batterie 104 genutzt. Fig. 5b zeigt bei voll aufgeladen Batterien, dass das System den Eigenverbrauch versorgt und überschüssige Energie ins Stromnetz einspeist. Am Abend wird wie in Fig. 5c dargestellt nach Sonnenuntergangenergie aus der Batterie zur Verfügung gestellt. Bei dem gezeigten Ausführungsbeispiel sind Eigenverbrauchsquoten von 70 % und mehr zu erreichen. In Fig. 5d ist ein Zustand in der Nacht gezeigt, bei dem die Kapazität der Batterie nicht ausreicht, um den Eigenverbrauch abzudecken, sodass Strom aus dem öffentlichen Netz bezogen wird, um den Stromverbrauch zu decken.

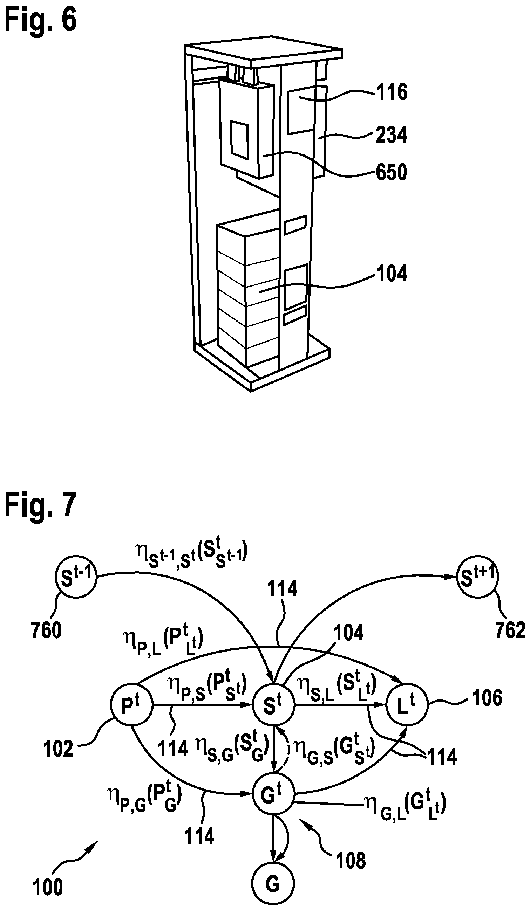

Fig. 6 zeigt eine Darstellung eines Fotovoltaik-Speichersystems mit DC-Topologie gemäß einem Ausführungsbeispiel der vorliegenden Erfindung. Das System umfasst ein Energiemanagementsystem 116 einen Batterieladeregler 234, einen Stringinverter 650 sowie ein Speichersystem 104, welches in dem gezeigten Ausführungsbeispiel als eine Lithium-Ionen-Batterie mit 4-6 Modulen à 2,2 kWh ausgebaut ist. Dabei umfasst das Speichersystem 104 weiterhin ein Batteriemanagementmodul, eine CanOpen-Buskommunikation sowie eine Einrichtung zum Schutz der Batterie.

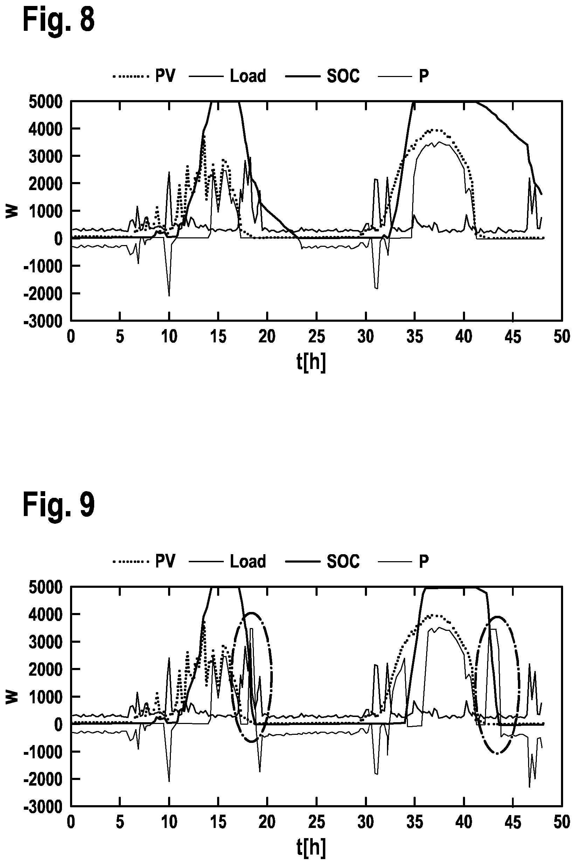

In Fig. 6 ist ein PV-Speichersystem 100 dargestellt. Das beispielsweise in Fig. 9 dargestellte Verfahren ist in einer Steuereinheit, hier in das Energie Management-System 116, integriert. Bei nicht integrierten Systemen kann diese Steuereinheit auch ein externes Gerät sein. Dabei ist es unerheblich, ob das System in unmittelbarer Nähe zum Gerät, oder über eine Kommunikationsverbindung an einem anderen Ort installiert ist. Zur Realisierung des Verfahrens muss sichergestellt sein, dass das Energie-Management-System Informationen zum aktuellen Verbrauch und zur Produktion erhält.

Fig. 7 zeigt eine schematische Darstellung von Leistungsflüssen 114 und Energieflüssen eines Fotovoltaiksystems 100 gemäß einem Ausführungsbeispiel der vorliegenden Erfindung. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, ein Speichersystem 104, einen Haushaltsanschluss 106 sowie einen Netzanschluss 108. Zwischen den Komponenten des Fotovoltaiksystems 100 sind Leistungsflüsse 114 dargestellt. Die einzelnen Komponenten des Fotovoltaiksystems 100 sowie die Leistungsflüsse lassen sich mathematisch beschreiben.

Fig. 7 stellt die Leistungs- und Energieflüsse eines PV-Speichersystems dar. Produktion repräsentiert durch Produktionsdaten 118, und Haushaltsverbrauch, repräsentiert durch Verbrauchswerte 120, sowie der Energiefluss des Speichers 104 aus der Vorperiode 760, sind jeweils vorgegeben. Im Folgenden wird die Realisierung eines Ausführungsbeispiels eines erfindungsgemäßen Verfahrens beschrieben. Unabhängig von der verwendeten Topologie kann die Funktionsweise eines PV-Speichersystems 100 durch seine Leistungs- und Energieflüsse 114 beschrieben werden. In Fig. 7 ist der zugrunde liegende Graph dargestellt. Es werden in diesem Fall vier Knoten $P^t$, $S^t$, $L^t$, $G^t$ benötigt, die die verschiedenen Komponenten 102, 104, 106, 108 des Systems beschreiben:

$P^t$: Stellt die zum Zeitpunkt t am PV-Generator abrufbare Leistung dar.
$S^t$: Stellt die zum Zeitpunkt t in die Batterie gespeicherte oder aus der Batterie abrufbare Energie dar.
$L^t$: Entspricht der zum Zeitpunkt t benötigte Leistung zur Versorgung der Verbraucher in einem Haushalt.
$G^t$: Repräsentiert die Leistung, die in das Netz gespeist oder vom Netz abgerufen wird.

Da kein verlustfreier Leistungstransport möglich ist, müssen diese Verluste ebenfalls ins Model integriert werden. Dies erfolgt durch den jeweiligen Wirkungsgrad von $x$ nach $y$ und wird als $n_{x,y}(M)$ beschrieben. Dabei beschreibt M die Menge der transportierten Leistung. Es gilt

$$\eta_{x,y}(M) \in [0,1] \tag{1}$$

Im Rahmen der Modellierung wird vereinbart, dass die Leistungsverluste stets erst beim Energie- bzw. Leistungsempfänger berücksichtigt werden. Zur Erhaltung der Übersichtlichkeit wird das Argument $M$ in den folgenden Formeln nicht mitgeschrieben, wenn aus dem Zusammenhang ersichtlich ist, welche Leistungsmenge anzusetzen ist. $P^t$ stellt die zum Zeitpunkt t bereitgestellte Leistung des PV-Generators dar. Grundsätzlich besteht die Möglichkeit nicht die gesamte mögliche Leistung in Anspruch zu nehmen, das heißt, der Wechselrichter kann die Leistung des PV-Generators abregeln. $P^t_{S^t}$ ist der Leistungsfluss vom Generator zum Speicher, $P^t_{L^t}$ der Leistungsfluss vom Generator zu den Verbrauchern im Haushalt und $P^t_G$ den Leistungsfluss vom Generator ins Netz.

$$\left(P^t_{S^t} + P^t_{L^t} + P^t_G\right) \leq P^t \tag{2}$$

Die Leistungs- und Energieflüsse zum Speicher werden wie folgt beschrieben:

$$\eta_{PS} P^t_{S^t} + \eta_{GS} G^t_{S^t} + \frac{\eta_{S^{t-1},S^t} S^{t-1}}{\Delta t} - \left(\frac{S^{t+1}}{\Delta t} + S^t_{G^t} + S^t_{L^t}\right) = 0 \tag{3}$$

Der Speicher erhält aus der PV-Anlage die Leistung $P^t_{S^t}$. Zusätzlich kann der Speicher aus dem Netz mit der Leistung $G^t_{S^t}$ geladen werden. Die Tatsache, dass ein Speicher bereits geladen sein kann, wird durch den dritten Term modelliert. $S^{t-1}$ stellt jene Energie dar, mit der der Speicher in der Vergangenheit geladen wurde. Der Wirkungsgrad $\eta_{s^{t-1},st}$ repräsentiert somit die Selbstentladung des Speichers. Die Entladung der Batterie kann darüber erfolgen, dass Leistung ins Netz eingespeist $S^t_{G^t}$ oder zur Deckung der Verbraucher $S^t_{L^t}$ verwendet wird. Der Rest der zur Verfügung stehenden Leistung wird in den zukünftigen Speicher $S^{t+1}$ überführt.

Der Hausverbrauch ist zum aktuellen Zeitpunkt $L^t$ voll zu decken. Dies kann durch Leistungsaufnahme aus dem Netz $G^t_{L^t}$, direkt aus der PV-Anlage $P^t_{L^t}$ oder dem Speicher $S^t_{L^t}$ geschehen:

$$L^t - \left(G^t_{L^t} + \eta_{PL} P^t_{L^t} + \eta_{SL} S^t_{L^t}\right) = 0 \tag{4}$$

Für den Netzknoten gilt, dass er jene Leistung aufnimmt oder abgibt, die vom Speicher, der PV-Anlage oder dem Haushalt eingespeist, bzw. aufgenommen wird. Er kann jeden beliebigen Wert annehmen, solange die Netzanschlussleistung $AC_{max}$ nicht überschritten wird. Es gilt

$$-AC_{max} \leq \eta_{P,G}P_G^t + \eta_{S,G}S_{G^t}^t - G_{L^t}^t - G_{S^t}^t \leq AC_{max} \tag{5}$$

Dabei kann auf vertragliche, gesetzliche oder technische Aspekte Rücksicht genommen werden. Im folgenden wird, analog zum deutschen Energieeinspeisegesetz (EEG 2012) für PV-Anlagen, mit einer installierten Leistung bis 15kVA, angenommen, dass der Nettofluss am Anschlusspunkt nicht mehr als 70% der installierten Leistung $P_{inst}$ betragen darf. Aus diesem Grund muss die Gleichung für die Anschlussbedingung (5) modifiziert werden:

$$-AC_{max} \leq \eta_{P,G}P_G^t + \eta_{S,G}S_{G^t}^t - G_{L^t}^t - G_{S^t}^t \leq 70\%P_{inst} \tag{6}$$

Die Flussgleichungen zum Zeitpunkt t lassen sich somit folgend zusammenfassen: für die Produktionsgleichung $P_{S^t}^t + P_{L^t}^t + P_G^t \leq P^t$, für die Speichergleichung $\eta_{PS} P_{S^t}^t + \eta_{GS}G_{S^t}^t + \frac{\eta_{S^{t-1},S^t} S^{t-1}}{\Delta t} - \left(\frac{S^{t+1}}{\Delta t} + S_{G^t}^t + S_{L^t}^t\right) = 0$, für die Verbrauchsgleichung $L^t - \left(G_{L^t}^t + \eta_{PL}P_{L^t}^t + \eta_{SL}S_{L^t}^t\right) = 0$ sowie für die Netzgleichung $AC_{max} \leq \eta_{P,G}P_G^t + \eta_{S,G}S_{G^t}^t - G_{L^t}^t - G_{S^t}^t \leq 70\%P_{inst}$.

Für die Knoten gelten unterschiedliche Wertebereiche. Die Fotovoltaik-Produktion ist positiv, aber auf die Größe der Fotovoltaik-Anlage $PV_{max}$ [kW] limitiert.

$$P^t \in [0, PV_{max}] \tag{7}$$

Auch die Speicherkapazität ist stets positiv, hier liegt die Limitierung an der Gesamtkapazität $K_S$[kWh].

$$S^t \in [0, K_S] \tag{8}$$

Es wird angenommen, dass keine weiteren Erzeugungseinheiten im Haushalt vorhanden sind, d. h. keine weiteren PV-Anlagen oder kleinere Blockheizkraftwerke. In diesem Fall gilt für den Verbrauch lediglich:

$$L^t \geq 0 \tag{9}$$

Mit diesen Angaben ist das mathematische Problem vollständig beschrieben. Zur Lösung zu einem bestimmten Zeitpunkt t, sind lediglich die aktuelle PV-Produktion, der Verbrauch, sowie der aus der Vergangenheit stammende Wert für den Speicherinhalt noch notwendig.

Die Stromnetze müssen entsprechend der Nachfrage Strom bereitstellen können. Hierzu muss genug Strom produziert beziehungsweise bereitgestellt werden. Ein Wert, die Angebot und Nachfrage beschreibt, kann als Leistungsbedarfsparameter bezeichnet werden. Es zeigt sich, dass die Entlohnung für eingespeisten Strom, das heißt, also die Einspeisevergütung und auf der anderen Seite die Strombezugskosten ein idealer Wert als Leistungsbedarfsparameter sind. Somit bietet eine wirtschaftliche Optimierung gleichzeitig eine technische Optimierung entsprechend Angebot und Nachfrage beziehungsweise zur Herstellung eines stabilen Stromnetzes.

Für wirtschaftliche Optimierung der Betriebsführung ist es notwendig, die dargestellten Leistungs- und Energieflüsse monetär zu bewerten. So kann eine Entscheidung über die Verteilung der zur Verfügung stehenden Leistung getroffen werden. Die Entscheidung über einen bestimmten Leistungsfluss wird für ein bestimmtes Zeitintervall $\Delta t$ getroffen. Hieraus ergibt sich eine Energiemenge, die transferiert wird.

Die Kosten und Einnahmen für die verschiedenen Leistungs- und Energieflüsse lassen sich einzeln darstellen. Kosten entstehen zum einen durch Leistungsverluste und zum anderen durch den Ankauf von Strom. Die Leistungsverluste sind in einen konstanten Anteil $v_{X,Y}$ und in einen in $P_Y$ linearen Anteil $\kappa_{X,Y}$ aufgeteilt. Alternativ kann hier auch noch ein in $P_Y$ nichtlinearer Anteil verwendet werden. In diesem Fall handelt es sich um ein nichtlineares Optimierungsproblem.

Eine Besonderheit stellt die Kostenbewertung von $G_{S^t}^t$ dar. Hier werden die Stromkosten zweifach bewertet. Dies wird notwendig, da ansonsten die vermiedenen Stromkosten, die bei einer Entladung der Batterie als Gewinn bewertet würden, die Stromkosten beim Laden der Batterie kompensieren würden. Diese fehlerhafte Verrechnung von Opportunitätskosten mit realen Kosten macht die zweifache Bewertung notwendig.

Für den Leistungsfluss $P_G^t$ können die Kosten mit $c_i^t(v_{PG} + \kappa_{PG}P_G^t)\,\Delta t$ und die Einnahmen mit $c_i^t P_G^t\,\Delta t$ angesetzt werden. Für den Leistungsfluss $P_S^t$ können die Kosten mit $c_{gc}^t(v_{PS} + \kappa_{PS}P_S^t)\,\Delta t$ angesetzt werden. Für den Leistungsfluss $P_L^t$ können die Kosten mit $c_{gc}^t(v_{PL} + \kappa_{PL}P_L^t)\Delta t$ und die Einnahmen mit $c_{gc}^t P_L^t \Delta t$ angesetzt werden. Für den Leistungsfluss $S_L^t$ können die Kosten mit $-c_{gc}^t(v_{SL} + \kappa_{SL}S_L^t)\,\Delta t$ und die Einnahmen mit $c_{gc}^t S_L^t \Delta t$ angesetzt werden. Für den Leistungsfluss $S_G^t$ können die Kosten mit $-c_i^t(v_{SG} + \kappa_{SG}S_G^t)\,\Delta t$ und die Einnahmen mit $c_i^t S_G^t\,\Delta t$ angesetzt werden. Für den Leistungsfluss $S^{t+1}$ können die Kosten mit $-c_{gc}^t(v_{SS} + \kappa_{SS}S^{t+1})$ und die Einnahmen mit $c_{gc}^t S_L^t$ angesetzt werden. Für den Leistungsfluss $G_L^t$ können die Kosten mit $-c_{gc}^t G_L^t\,\Delta t$ angesetzt werden. Für den Leistungsfluss $G_S^t$ können die Kosten mit $-c_{gc}^t(v_{GS} + (2 + \kappa_{GS})G_S^t)\Delta t$ angesetzt werden.

Die dargestellten Flussgleichungen werden in eine verallgemeinerte Form gebracht. Hierzu wird zunächst ein Zustandsvektor $x^t$ definiert, der die Leistungs- und Energieflüsse zusammenfasst:

$$x^t = (P_G^t, P_S^t, P_L^t, S_L^t, S_G^t, S^{t+1}, G_L^t, G_S^t) \tag{10}$$

Der Zustand wird durch den zeitanhängigen Parameter $y^t$ beeinflusst:

$$y^t = \left(P^t, L^t, c_{in}^t, c_{gc}^t\right) \tag{11}$$

Die Flussgleichungen lassen sich als lineare (Un-)Gleichungen formulieren:

$$M_{le}x^t \leq \begin{pmatrix} y_1^t \\ 70\%P_{inst} \end{pmatrix} \tag{12}$$

$M_{le}$ fasst die "kleiner gleich" Ungleichungen aus der Beschreibung der Leistungsflüsse zusammen:

$$M_{le} = \begin{pmatrix} 1 & 1 & 1 & 0 & 0 & 0 & 0 & 0 \\ \eta_{PG} & 0 & 0 & 0 & \eta_{SG} & 0 & -1 & -1 \end{pmatrix} \tag{13}$$

$y_1^t$ steht hierbei für die erste Komponente des Parametervektors. Für die "gleich" Gleichungen gilt dann

$$M_{eq}x^t = \begin{pmatrix} \frac{x_{SS}^{(t-1)}\eta_{SS}}{\Delta t} \\ y_2^t \end{pmatrix} \tag{14}$$

mit

$$M_{eq} = \begin{pmatrix} 0 & \eta_{PS} & 0 & -1 & -1 & \frac{1}{\Delta t} & 0 & \eta_{GS} \\ 0 & 0 & \eta_{PL} & \eta_{SL} & 0 & 0 & 1 & 0 \end{pmatrix}. \tag{15}$$

Die "größer gleich" gilt dann

$$M_{ge}x^t \geq (-AC_{max}) \tag{16}$$

mit

$$M_{ge} = (\eta_{PG} \quad 0 \quad 0 \quad 0 \quad \eta_{SG} \quad 0 \quad -1 \quad -1). \tag{17}$$

Weiterhin gelten noch die Randbedingungen $\forall i: x_i^t \geq 0$ und die Begrenzung der Speicherkapazität der Batterie $x_6^t \leq K_{Batt}$ wobei $K_{Batt}$[kWh] die Gesamtkapazität darstellt.

Die Ertragsfunktion $K^t$ lautet

$$K^t = \sum_j \bar{\gamma}_j^t(y^t)x_j^t + \omega_j^t \tag{18}$$

$y^t$ fasst die in $x_j^t$ linearen Terme der Erträge der Leistungs- und Energieflüsse zusammen:

$$\gamma^t = \begin{pmatrix} c_i^t(\kappa_{PG}-1)\Delta t & c_{gc}^t(-\kappa_{PS})\Delta t & c_{gc}^t(1-\kappa_{PL})\Delta t & c_{gc}^t(1-\kappa_{SL})\Delta t & ... \\ c_i^t(1-\kappa_{SG})\Delta t & -c_{gc}^t\kappa_{SS} & -c_{gc}^t\Delta t & -c_{gc}^t(2+\kappa_{GS})\Delta t \end{pmatrix} \tag{19}$$

$\omega_j^t$ fasst die konstanten Verlustterme der Flüsse zusammen:

$$\omega_j^t = \begin{pmatrix} -c_i^t\nu_{PG}\Delta t & -c_{gc}^t\nu_{PS}\Delta t & -c_{gc}^t\nu_{PL}\Delta t - c_{gc}^t\nu_{SL}\Delta t & ... \\ -c_i^t\nu_{SG}\Delta t & c_{gc}^t\nu_{SS} & 0 & -c_{gc}^t\nu_{GS}\Delta t \end{pmatrix} \tag{20}$$

Mit diesen Formulierungen kann die Betriebsführung als Lösung eines linearen Programms interpretiert werden. Diese Formulierung erlaubt es, die lokal effizienzgesteuerte und marktgesteuerte Betriebsführung zu realisieren.

Die zeitlich lokale Optimierung löst das lineare Programm zu jedem einzelnen Zeitpunkt t. Da die Verwendung des Speichers beziehungsweise des Speichersystems einer Verschiebung der Erträge entspricht, die bei der Betrachtung zum Zeitpunkt t (noch) nicht realisiert werden, muss die Kostenfunktion um eine monetäre Bewertung des Ladezustands der Batterie erweitert werden. Dabei entspricht die Kostenfunktion einer Betrachtung der Energieflüsse unter Berücksichtigung des Leistungsparameters und bestimmt einen Erwartungswert.

Wird davon ausgegangen, dass der Speicher beziehungsweise das Speichersystem ausschließlich dazu genutzt wird, die Lasten zu decken, entspricht der Wert der gespeicherten Energie dem Wert der vermiedenen Stromkosten oder einem negativen Erwartungswert:

$$\gamma_6^t = c_{gc}^t(1-\kappa_{SS}) \tag{21}$$

Die Leistungsflüsse und Energieflüsse werden so festgelegt, dass der Ertragswert beziehungsweise der Ertrag, der zum Zeitpunkt t erzielt werden kann, zuzüglich dem Wert der gespeicherten Energie maximal wird:

$$\max_{x^t} K^t(x^t, y^t) \tag{22}$$

Fig. 8 zeigt eine Darstellung von Kurvenverläufen von Kenndaten und Energieflüssen bei Verwendung einer effizienzgesteuerten Betriebsführung gemäß einem Ausführungsbeispiel der vorliegenden Erfindung. In einem kartesischen Koordinatensystem ist auf der Abszisse die Zeit in Stunden und auf der Ordinate die Leistung in Watt dargestellt. Dabei zeigt die Abszisse einen Zeitraum von zwei Tagen bzw. 50 h. Der Leistungsbereich erstreckt sich von - 3000 W bis 5000 W. Die Kenndaten und Energieflüsse können entsprechende Daten eines in den Figuren Fig. 1 bis Fig. 5 sowie Fig. 7 beschriebenen Fotovoltaiksystems repräsentieren. Es sind vier Kurvenverläufe PV, Load, SOC, P dargestellt. PV zeigt den Produktionswert des Solargenerators beziehungsweise die Produktion der Fotovoltaik-Leistung. Load stellt den Verbrauchswert am Haushaltsanschluss dar, beziehungsweise stellt Load den Verbrauch des angeschlossenen Haushalts dar. SOC steht als Abkürzung für "state of charge" und entspricht dem Ladezustand der Batterie. Der mit dem Bezugszeichen P versehene Kurvenverlauf stellt die aus dem Netz beziehungsweise am Netzanschluss bezogene Energie dar. Indirekt ist aus den Kurvenverläufen der Leistungsfluss zwischen den Komponenten des Fotovoltaiksystems abzulesen.

Bei den in Fig. 8 dargestellten Kurvenverläufen wird von einem konstanten Leistungsbedarfsparameter ausgegangen. In den Nachtstunden besteht ein geringer Leistungsbedarf, der über den Netzanschluss gedeckt wird. Morgens steigt erst der Bedarf am Haushaltsanschluss, bevor auch der Solargenerator Strom erzeugt und bereitstellt. Gegen 8 Uhr steigt die Produktion des Solargenerators über den Verbrauch am Haushaltsanschluss und die überschüssige Energie wird dem Speichersystem zugeführt und erhöht somit den Ladezustand des Speichersystems. Gegen 14 Uhr ist das Speichersystem vollständig geladen, sodass die überschüssige Energie am Netzanschluss in das Stromnetz eingespeist wird. In den Abendstunden sinkt zuerst der Produktionswert des Solargenerators und dann steigt die Nachfrage am Haushaltsanschluss. Der Eigenbedarf am Haushaltsanschluss kann bis gegen Mitternacht vollständig über die im Speichersystem vorrätige Leistung abgedeckt werden, bis dann das Speichersystem leer ist und die Grundlast über den Netzanschluss bezogen wird. An dem zweiten Tag steht vom Solargenerator mehr Energie zur Verfügung, wodurch sehr früh und über einen langen Zeitraum das Speichersystem zu 100% geladen ist und die überschüssige Energie in das Stromnetz über den Netzanschluss eingespeist wird. Selbst am Ende des zweiten Tages, das heißt nach 48 beziehungsweise 50 Stunden steht weist das Speichersystem noch einen positiven Ladezustand von ca. 30% auf.

In Fig. 8 ist ein Tagesverlauf mit einer effizienzgesteuerten Betriebsführung dargestellt. Qualitativ entspricht dieser Verlauf der in Fig. 5a bis Fig. 5d beschriebenen Betriebsführung von Fotovoltaik-Speichersystemen: Steht noch keine Fotovoltaik-Leistung zur Verfügung, muss der Strom aus dem Netz bezogen werden. Sobald die Fotovoltaikleistung bereitsteht, wird diese zunächst für die Deckung des Hausverbrauchs genutzt und im Fall eines Überschusses erfolgt die Speicherung. Gegen Abend, wenn die Fotovoltaik-Produktion zu schwach wird, wird die Batterie beziehungsweise das Speichersystem entladen. Dabei wird durch eine Priorisierung der Leistungsflüsse und einer Festlegung, welche Flüsse für die Einhaltung der Nebenbedingungen genutzt werden, das lineare Programm näherungsweise gelöst. Der hier dargestellte Ansatz, das heißt das Verfahren zur energieeffizienten Betriebsführung, führt diese Priorisierung und Mengenfestlegung unter Berücksichtigung der Verluste und der aktuellen Preis- und Tarifstruktur in Form des Leistungsparameters, insbesondere eines zeitlich variablen Leistungsparameters, durch. Dies wird zu jedem Zeitpunkt durchgeführt, welches einen präziseren Betrieb erlaubt. Das Verfahren ist in der Lage, im Fall einer Änderung des Leistungsparameters beispielsweise in Form einer Tarif- und Preisänderung nach Kenntnis der neuen Struktur automatisch zu reagieren.

Ein Aspekt der in Fig. 8 dargestellten Kurvenverläufe ist eine Simulation eines vollen Tages. In jedem 1/4-Stunden-Intervall wird lokal der gewinnoptimale Leistungsfluss zwischen den verschiedenen Quellen und Senken berechnet. PV bezeichnet die Produktion der PV-Leistung oder Fotovoltaik-Leistung. Load stellt den Verbrauch des Haushaltes dar. SOC (="State of Charge") entspricht dem Ladezustand der Batterie.

In Fig. 8 wird der Leistungsparameter zur Netzeinspeisung als konstant angenommen. In Fig. 9 ist das Systemverhalten bei einem Tag- und Nachtstrompreistarif dargestellt. Der Tagstrom liegt beispielsweise bei 0,27€/kWh. Der Nachtstrom liegt beispielsweise bei 0,09€/kWh. Der Einspeisetarif liegt beispielsweise bei 0,10€/kWh. Bei solchen Leistungsbedarfsparametern beziehungsweise einem solchen Tarif ist es sinnvoller, Nachts den Strom zu verkaufen, anstatt ihn selber zu verbrauchen. Umgekehrt macht es mehr Sinn, tagsüber möglichst viel Strom zu sparen. Ohne Anpassung des Verhaltens würde in diesem Beispiel eine konservative Betriebsführung nach dem Stand der Technik einen Ertrag von 1,35€ erzielen. Mit den für diesen neuen Tarif notwendigen Anpassungen beläuft sich der Ertrag auf 1,58€. Die Verwendung des Verfahrens sorgt in diesem Fall für eine Ertragssteigerung von 17%. Dabei wird die Ertragssteigerung als Hinweis oder Parameter für eine verbesserte Netzstabilität betrachtet. So führt die energieeffiziente Betriebsführung zu einer verbesserten Frequenzhaltung. Indirekt spielen hier der Energiebedarf und der Netzbedarf in die Betriebsführung.

Fig. 9 zeigt eine Darstellung von Kurvenverläufen von Kenndaten und Energieflüssen bei Verwendung einer effizienzgesteuerten Betriebsführung gemäß einem Ausführungsbeispiel der vorliegenden Erfindung. Die Darstellung in Fig. 9 entspricht weitgehend der Darstellung in Fig. 8. Die beiden Figuren unterscheiden sich durch einen geänderten Leistungsbedarfsparameter.

Der Leistungsbedarfsparameter variiert zwischen Tag und Nacht. Als Leistungsbedarfsparameter wird hier eine Strompreistarifstruktur angenommen, welche einen Tagtarif und einen Nachttarif einführt. Dabei wird davon ausgegangen, dass während der Tagstunden zur Frequenzhaltung oder alternativ zur Spannungshaltung ein höherer Bedarf zur Netzeinspeisung besteht, als während der Nachtstunden. Am ersten Tag des Betrachtungszeitraums führt der über die Zeit variierende Leistungsbedarfsparameter dazu, dass in den Abendstunden die in dem Speichersystem gespeicherte Energie am Netzanschluss bereitgestellt wird. Dabei zeigt sich, dass die Betriebsführung über den Leistungsbedarfsparameter Effizienz gesteuert durchgeführt wird.

In einem Ausführungsbeispiel zeigt Fig. 9 ein Systemverhalten bei einer Strompreistarifstruktur, die einen Tag- und einen Nachttarif einführt, das heißt einen Leistungsbedarfsparameter, der unterschiedliche Werte im Verlauf eines Tages einnimmt. Da zur Abendzeit der Strompreis niedriger als die Einspeisevergütung ist, reagiert das System und verkauft den in der Batterie eingelagerten Strom (Markierungen).

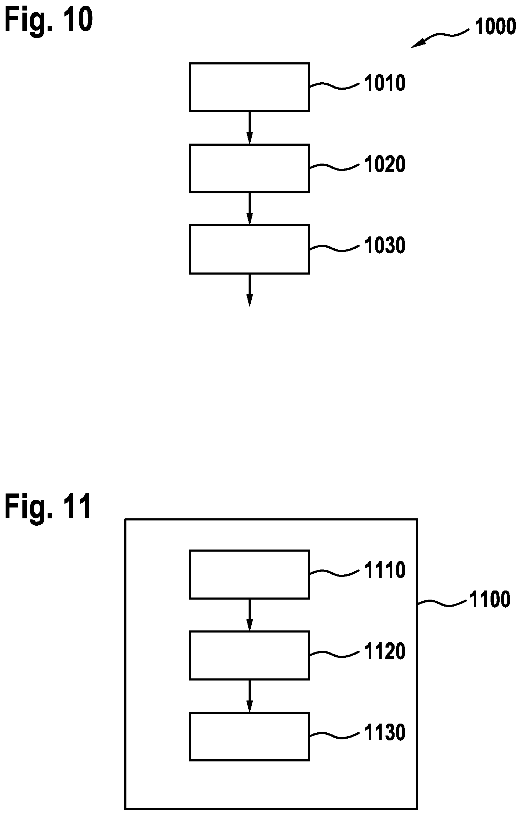

Fig. 10 zeigt ein Ablaufdiagramm eines Verfahrens 1000 gemäß einem Ausführungsbeispiel der vorliegenden Erfindung. Das Verfahren 1000 zur effizienzgesteuerten Betriebsführung für ein Speichersystem für ein Fotovoltaiksystem umfasst in dem vorgestellten Ausführungsbeispiel drei Schritte. Das Verfahren 1000 kann in Zusammenhang mit einem Fotovoltaiksystem, welches ein Energie-Management-System, einen Solargenerator und ein Speichersystem sowie einen Haushaltsanschluss und einen Netzanschluss umfasst, ausgeführt werden. Bei dem Fotovoltaiksystem kann es sich um ein in den Figuren Fig. 1 bis Fig. 7 beschriebenes Fotovoltaiksystem 100 handeln. Das Verfahren 1000 umfasst einen Schritt 1010 des Einlesens von aktuellen Kenndaten des Fotovoltaiksystems und von erwarteten Kenndaten des Fotovoltaiksystems, einen Schritt 1020 des Bestimmens einer Vielzahl möglicher Energieflüsse zwischen den Komponenten des Fotovoltaiksystems für das aktuelle Zeitintervall unter Verwendung der aktuellen Kenndaten und Bestimmen eines Erwartungswertes je Energiefluss der Vielzahl möglicher Energieflüsse unter Verwendung eines Leistungsbedarfsparameters und der Vielzahl möglicher Energieflüsse sowie einen Schritt 1030 des Wählens eines Energieflusses aus der Vielzahl möglicher Energieflüsse für das aktuelle Zeitintervall, wobei der Erwartungswert für das aktuelle Zeitintervall maximal ist, wobei der Energiefluss die effizienzgesteuerte Betriebsführung bestimmt. Dabei repräsentieren die aktuellen Kenndaten Produktionsdaten und gleichzeitig oder alternativ Verbrauchswerte zu zumindest einem aktuellen Zeitpunkt.

In einem Ausführungsbeispiel repräsentieren die Kenndaten eine am Solargenerator abrufbare Leistung $P_t$ und/oder eine in dem Speichersystem gespeicherte Leistung und/oder von dem Speichersystem abrufbare Leitung $S_t$ und/oder eine zur Versorgung der Verbraucher benötigte Leistung $L_t$ und/oder eine Leistung $G_t$, die in ein Netz eingespeist oder aus dem Netz abgerufen wird, , wobei die aktuellen Kenndaten Daten zu einem aktuellen Zeitintervall repräsentieren.

In einem Ausführungsbeispiel wird im Schritt 1020 des Bestimmens die Vielzahl möglicher Energieflüsse unter Verwendung je eines einem Energiefluss zuordenbaren Wirkungsgrades bestimmt.

In einem nicht gezeigten Ausführungsbeispiel weist das Verfahren 1000 einen Schritt des Ausgebens eines Steuersignals auf. Dabei ist das Steuersignal ausgebildet, den Energiefluss zwischen den Komponenten des Fotovoltaiksystems entsprechend dem im Schritt des Wählens gewählten Energieflusses zu steuern.

In einem Ausführungsbeispiel entspricht im Schritt 1020 des Bestimmens der dem Ladezustand des Speichersystems in einem aktuellen Zeitintervall zugeordnete Erwartungswert einem negativen Erwartungswert für ein zukünftiges Zeitintervall.

In einem Ausführungsbeispiel wird im Schritt 1030 des Wählens des Energieflusses und/oder der effizienzgesteuerten Betriebsführung ein Energiefluss zwischen den Komponenten des Fotovoltaiksystems für das aktuelle Zeitintervall bestimmt.

Das Verfahren kann mit anderen Worten zusammenfassend dargestellt werden:

Bilde $y^t = \left(P^t, L^t, c_{in}^t, c_{gc}^t\right)$ aus den aktuellen Produktionswerten und Verbrauchswerten.

Ermittel $x^t$ durch Lösung des Optimierungsproblems nach Gleichung (22). Realisiere die so ermittelten Leistungsflüsse und Energieflüsse.

Inkrementiere die Zeit: $t \rightarrow t + \Delta t$

Wiederholen der vorangegangenen Schritte, bis die Simulation beendet ist.

Fig. 11 zeigt ein Blockschaltbild einer Vorrichtung 1100 gemäß einem Ausführungsbeispiel der vorliegenden Erfindung. Die Vorrichtung 1100 ist ausgebildet, die Schritte eines Ausführungsbeispiels des in Fig. 10 beschriebenen Verfahrens in entsprechenden Einrichtungen durchzuführen. Die Vorrichtung kann mit einem Ausführungsbeispiel eines Fotovoltaiksystems, wie es in den Figuren Fig. 1 bis 7 beschrieben ist, eingesetzt werden. Dabei umfasst die Vorrichtung eine Schnittstelle 1110 beziehungsweise eine Einrichtung 1110 zum Einlesen von aktuellen Kenndaten des Fotovoltaiksystems, wobei die aktuellen Kenndaten Produktionsdaten und/oder Verbrauchswerte und/oder einen Ladezustand des Speichersystems zum aktuellen Zeitpunkt,. Weiterhin umfasst die Vorrichtung 1100 eine Einrichtung 1120 zum Bestimmen einer Vielzahl möglicher Energieflüsse zwischen den Komponenten des Fotovoltaiksystems für das aktuelle Zeitintervall unter Verwendung der aktuellen Kenndaten und Bestimmen eines Erwartungswertes je Energiefluss der Vielzahl möglicher Energieflüsse unter Verwendung eines Leistungsbedarfsparameters und der Vielzahl möglicher Energieflüsse . In einer Einrichtung 1130 des Wählens eines Energieflusses aus der Vielzahl möglicher Energieflüsse für das aktuelle Zeitintervall, wobei der Erwartungswert für das aktuelle Zeitintervall maximal ist, wobei der Energiefluss die effizienzgesteuerte Betriebsführung bestimmt.

In einem Ausführungsbeispiel umfasst die Vorrichtung 1100 eine optionale Schnittstelle zum Ausgeben eines Steuersignals, wobei das Steuersignal ausgebildet ist, den Energiefluss zwischen den Komponenten des Fotovoltaiksystems entsprechend dem im in der Einrichtung 1130 des Wählens gewählten Energieflusses zu steuern.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (1000) zur effizienzgesteuerten Betriebsführung für ein Speichersystem (104) für ein Fotovoltaiksystem (100), wobei das Fotovoltaiksystem (100) als Komponenten zumindest einen Solargenerator (102), das Speichersystem (104), ein Energie-Management-System (116) sowie einen Haushaltsanschluss (106) und einen Netzanschluss (108) umfasst, wobei das Verfahren (1000) die folgenden Schritte aufweist:

   Einlesen (1010) von aktuellen Kenndaten des Fotovoltaiksystems (100), wobei die aktuellen Kenndaten Produktionswerte und Verbrauchswerte und einen Ladezustand (122) des Speichersystems (104) in einem aktuellen Zeitintervall repräsentieren, wobei das aktuelle Zeitintervall eine Zeitspanne innerhalb eines Zeitraums zwischen einem aktuellen Zeitpunkt und einem Zeitpunkt in der Zukunft ist;
   Bestimmen (1020) einer Vielzahl möglicher Energieflüsse (114) zwischen den Komponenten des Fotovoltaiksystems (100) für das aktuelle Zeitintervall unter Verwendung der aktuellen Kenndaten und Bestimmen eines Erwartungswertes je Energiefluss der Vielzahl möglicher Energieflüsse unter Verwendung eines Leistungsbedarfsparameters, der Angebot und Nachfrage im Stromnetz beschreibt, und der Vielzahl möglicher Energieflüsse (114), wobei der Erwartungswert eine elektrische Energie oder eine elektrische Leistung mit dem Leistungsbedarfsparameter kombiniert,
   wobei der Leistungsbedarfsparameter dem Fotovoltaiksystem zur Verfügung gestellt wird, um eine Netzeinspeisung bedarfsorientiert zu steuern, wobei der dem Ladezustand (122) des Speichersystems (104) in einem aktuellen Zeitintervall zugeordnete Erwartungswert einem negativen Erwartungswert für ein zukünftiges Zeitintervall entspricht, und wobei nur der Leistungsbedarfsparameter zum Laden des Speichers aus dem Netz für die Bestimmung des Erwartungswertes zweifach bewertet wird, und
   Wählen (1030) eines Energieflusses (114) aus der Vielzahl möglicher Energieflüsse (114) für das aktuelle Zeitintervall, wobei der Erwartungswert für das aktuelle Zeitintervall maximal ist, wobei der Energiefluss (114) die effizienzgesteuerte Betriebsführung bestimmt.

2. Verfahren (1000) gemäß Anspruch 1, bei dem die Kenndaten eine am Solargenerator (102) abrufbare Leistung Pt und/oder eine in dem Speichersystem (104) gespeicherte Leistung und/oder von dem Speichersystem (104) abrufbare Leitung St und/oder eine zur Versorgung der Verbraucher benötigte Leistung $L_t$ und/oder eine Leistung $G_t$, die in ein Netz (108) eingespeist oder aus dem Netz (108) abgerufen wird, repräsentieren, wobei die aktuellen Kenndaten Daten zu einem aktuellen Zeitintervall repräsentieren.

3. Verfahren (1000) gemäß einem der vorangegangenen Ansprüche, bei dem im Schritt (1020) des Bestimmens die Vielzahl möglicher Energieflüsse (114) unter Verwendung je eines einem Energiefluss (114) zuordenbaren Wirkungsgrades bestimmt wird.

4. Verfahren (1000) gemäß einem der vorangegangenen Ansprüche, mit einem Schritt des Ausgebens eines Steuersignals, wobei das Steuersignal ausgebildet ist, den Energiefluss zwischen den Komponenten des Fotovoltaiksystems (100) entsprechend dem im Schritt (1030) des Wählens gewählten Energieflusses zu steuern.

5. Verfahren (1000) gemäß einem der vorangegangenen Ansprüche, bei dem im Schritt (1030) des Wählens des Energieflusses und/oder der effizienzgesteuerten Betriebsführung ein Energiefluss zwischen den Komponenten des Fotovoltaiksystems für das aktuelle Zeitintervall bestimmt wird.

6. Vorrichtung (1100), die ausgebildet ist, um die Schritte eines Verfahrens gemäß einem der Ansprüche 1 bis 4 in entsprechenden Einrichtungen durchzuführen, wobei die Vorrichtung (1100) die folgenden Einrichtungen umfasst:

   eine Schnittstelle (1110) zum Einlesen von aktuellen Kenndaten des Fotovoltaiksystems (100), wobei die aktuellen Kenndaten Produktionswerte und/oder Verbrauchswerte und/oder einen Ladezustand (122) des Speichersystems (104) in einem aktuellen Zeitintervall repräsentieren, wobei das aktuelle Zeitintervall eine Zeitspanne innerhalb eines Zeitraums zwischen einem aktuellen Zeitpunkt und einem Zeitpunkt in der Zukunft ist;
   eine Einrichtung (1120) zum Bestimmen einer Vielzahl möglicher Energieflüsse (114) zwischen den Komponenten des Fotovoltaiksystems (104) für das zumindest eine aktuelle und zukünftige Zeitintervall unter Verwendung des Satzes aktueller und zukünftiger Kenndaten und Bestimmen eines Erwartungswertes je Energiefluss der Vielzahl möglicher Energieflüsse unter Verwendung eines Leistungsbedarfsparameters, der Angebot und Nachfrage im Stromnetz beschreibt, und der Vielzahl möglicher Energieflüsse, wobei der Erwartungswert eine elektrische Energie oder eine elektrische Leistung mit dem Leistungsbedarfsparameter kombiniert, und wobei der Leistungsbedarfsparameter dem Fotovoltaiksystem zur Verfügung gestellt wird, um eine Netzeinspeisung bedarfsorientiert zu steuern, wobei die Einrichtung (1120) zum Bestimmen ausgebildet ist, um dem Ladezustand (122) des Speichersystems (104) in einem aktuellen Zeitintervall Erwartungswert zuzuordnen, der einem negativen Erwartungswert für ein zukünftiges Zeitintervall entspricht und wobei die Einrichtung (1120) zum Bestimmen ausgebildet ist, um nur den Leistungsbedarfsparameter zum Laden des Speichers aus dem Netz für die Bestimmung des Erwartungswertes zweifach zu bewerten; und

eine Einrichtung (1130) zum Wählen eines Energieflusses (114) aus der Vielzahl möglicher Energieflüsse (114) für das zumindest eine aktuelle und/oder zukünftige Zeitintervall, wobei der Erwartungswert für das zumindest eine aktuelle und/oder zukünftige Zeitintervall maximal ist, wobei der Energiefluss (114) die effizienzgesteuerte Betriebsführung bestimmt.

7. Fotovoltaiksystem (100) mit einem Solargenerator (102) und/oder einem Speichersystem (104) und/oder einem Energie-Management-System (116) und einer Vorrichtung gemäß Anspruch 6 zur optimierenden Betriebsführung für das Speichersystem (104).

**Claims**

1. Method (1000) for efficiency-controlled operational management for a storage system (104) for a photovoltaic system (100), wherein the photovoltaic system (100) comprises, as components, at least one solar generator (102), the storage system (104), an energy management system (116) and a household connection (106) and a grid connection (108), wherein the method (1000) has the following steps of:

   reading in (1010) present characteristic data relating to the photovoltaic system (100), wherein the present characteristic data represent production values and consumption values and a state of charge (122) of the storage system (104) in a present interval of time, wherein the present interval of time is a time span within a period between a present time and a time in the future;
   determining (1020) a multiplicity of possible energy flows (114) between the components of the photovoltaic system (100) for the present interval of time using the present characteristic data, and determining an expected value for each energy flow of the multiplicity of possible energy flows using a power requirement parameter, which describes supply and demand in the power grid, and the multiplicity of possible energy flows (114), wherein the expected value combines an electrical energy or an electrical power with the power requirement parameter,
   wherein the power requirement parameter is made available to the photovoltaic system in order to control grid feed-in in a needs-oriented manner, wherein the expected value assigned to the state of charge (122) of the storage system (104) in a present interval of time corresponds to a negative expected value for a future interval of time, and wherein only the power requirement parameter for charging the store from the grid is assessed twice in order to determine the expected value, and
   selecting (1030) an energy flow (114) from the multiplicity of possible energy flows (114) for the present interval of time, wherein the expected value for the present interval of time is at a maximum, wherein the energy flow (114) determines the efficiency-controlled operational management.

2. Method (1000) according to Claim 1, in which the characteristic data represent a power Pt which can be retrieved at the solar generator (102) and/or a power which is stored in the storage system (104) and/or a power St which can be retrieved from the storage system (104) and/or a power $L_t$ needed to supply the loads and/or a power $G_t$ which is fed into a grid (108) or is retrieved from the grid (108), wherein the present characteristic data represent data for a present interval of time.

3. Method (1000) according to one of the preceding claims, in which, in the determination step (1020), the multiplicity of possible energy flows (114) are determined using in each case an efficiency which can be assigned to an energy flow (114).

4. Method (1000) according to one of the preceding claims, having a step of outputting a control signal, wherein the control signal is designed to control the energy flow between the components of the photovoltaic system (100) according to the energy flow selected in the selection step (1030).

5. Method (1000) according to one of the preceding claims, in which an energy flow between the components of the photovoltaic system for the present interval of time is determined in the step (1030) of selecting the energy flow and/or the efficiency-controlled operational management.

6. Apparatus (1100) which is designed to carry out the steps of a method according to one of Claims 1 to 4 in corresponding devices, wherein the apparatus (1100) comprises the following devices:

   an interface (1110) for reading in present characteristic data relating to the photovoltaic system (100), wherein the present characteristic data represent production values and/or consumption values and/or a state of charge (122) of the storage system (104) in a present interval of time, wherein the present interval of time is a time span within a period between a present time and a time in the future;
   a device (1120) for determining a multiplicity of possible energy flows (114) between the components of the photovoltaic system (104) for the at least one present and future interval of time using the set of present and future characteristic data and determining an expected value for each energy flow of the multiplicity of possible energy flows using a power requirement parameter, which describes supply and demand in the power grid, and the multiplicity of possible energy flows, wherein the expected value combines an electrical energy or an electrical power with the power requirement parameter, and wherein the power requirement parameter is made available to the photovoltaic system in order to control grid feed-in in a needs-oriented manner, wherein the determination device (1120) is designed to assign an expected value to the state of charge (122) of the storage system (104) in a present interval of time, which expected value corresponds to a negative expected value for a future interval of time, and wherein the determination device (1120) is designed to assess twice only the power requirement parameter for charging the store from the grid in order to determine the expected value; and
   a device (1130) for selecting an energy flow (114) from the multiplicity of possible energy flows (114) for the at least one present and/or future interval of time, wherein the expected value for the at least one present and/or future interval of time is at a maximum, wherein the energy flow (114) determines the efficiency-controlled operational management.

7. Photovoltaic system (100) having a solar generator (102) and/or a storage system (104) and/or an energy management system (116) and an apparatus according to Claim 6 for optimizing operational management for the storage system (104).

**Revendications**

1. Procédé (1000) de gestion opérationnelle à efficacité commandée d'un système de stockage (104) destiné à un système photovoltaïque (100), le système photovoltaïque (100) comprenant comme composants au moins un générateur solaire (102), le système de stockage (104), un système de gestion d'énergie (116) ainsi qu'un raccordement domestique (106) et un raccordement au réseau (108), le procédé (1000) comprenant les étapes suivantes :

   lire (1010) des données caractéristiques actuelles du système photovoltaïque (100), les données caractéristiques actuelles représentant des valeurs de production et des valeurs de consommation et un état de charge (122) du système de stockage (104) dans un intervalle de temps actuel, l'intervalle de temps actuel étant une durée à l'intérieur d'une période entre un instant actuel et un instant dans le futur ;
   déterminer (1020) un grand nombre de flux d'énergie possibles (114) entre les composants du système photovoltaïque (100) pour l'intervalle de temps actuel à l'aide des données caractéristiques actuelles et déterminer une valeur attendue pour chaque flux d'énergie du grand nombre de flux d'énergie possibles à l'aide d'un paramètre de besoin de puissance qui décrit l'offre et la demande dans le réseau électrique, et le grand nombre de flux d'énergie possibles (114), la valeur attendue combinant une énergie électrique ou une puissance électrique avec le paramètre de besoin de puissance,
   le paramètre de demande de puissance étant mis à la disposition du système photovoltaïque afin de commander une injection de réseau en fonction du besoin, la valeur attendue associée à l'état de charge (122) du système de stockage (104) dans un intervalle de temps actuel correspondant à une valeur attendue négative pour un intervalle de temps futur, et seul le paramètre de besoin de puissance destiné à la charge de l'accumulateur à partir du réseau étant évalué deux fois pour déterminer la valeur attendue, et
   choisir (1030) un flux d'énergie (114) parmi le grand nombre de flux d'énergie possibles (114) pour l'intervalle de temps actuel, la valeur attendue pour l'intervalle de temps actuel étant maximale, le flux d'énergie (114) déterminant la gestion opérationnelle à efficacité commandée.

2. Procédé (1000) selon la revendication 1, dans lequel les donnée caractéristiques représentent une puissance Pt pouvant être demandée au niveau du générateur solaire (102) et/ou une puissance stockée dans le système de stockage (104) et/ou une puissance St pouvant être demandée par le système de stockage (104) et/ou une puissance Lt nécessaire pour approvisionner les consommateurs et/ou une puissance $G_t$ qui est injectée dans un réseau (108) ou demandée au réseau (108), les données caractéristiques actuelles représentant des données à un intervalle de temps actuel.

3. Procédé (1000) selon l'une des revendications précédentes, dans lequel, dans l'étape (1020) de détermination, le grand nombre de flux d'énergie possibles (114) est déterminé à l'aide d'un rendement pouvant être associé à un flux d'énergie (114).

4. Procédé (1000) selon l'une des revendications précédentes, comprenant une étape de délivrance d'un signal de commande, le signal de commande étant conçu pour commander le flux d'énergie entre les composants du système photovoltaïque (100) selon le flux d'énergie choisi à l'étape (1030) de la sélection.

5. Procédé (1000) selon l'une des revendications précédentes, dans lequel, dans l'étape (1030) de la sélection du flux d'énergie et/ou de la gestion opérationnelle à efficacité commandée, un flux d'énergie entre les composants du système photovoltaïque est déterminé pour l'intervalle de temps actuel.

6. Dispositif (1100), qui est conçu pour mettre en oeuvre les étapes d'un procédé selon l'une des revendications 1 à 4 dans des moyens correspondants, le dispositif (1100) comprenant les moyens suivants :

une interface (1110) destinée à lire des données caractéristiques actuelles du système photovoltaïque (100), les données caractéristiques actuelles représentant des valeurs de production et/ou des valeurs de consommation et/ou un état de charge (122) du système de stockage (104) dans un intervalle de temps actuel, l'intervalle de temps actuel étant une période à l'intérieur d'une durée entre un instant actuel et un instant dans le futur ; un moyen (1120) pour déterminer un grand nombre de flux d'énergie possibles (114) entre les composants du système photovoltaïque (104) pour ledit au moins un intervalle de temps actuel et futur à l'aide de l'ensemble de données caractéristiques actuelles et futures et pour déterminer une valeur attendue pour chaque flux d'énergie du grand nombre de flux d'énergie possibles à l'aide d'un paramètre de besoin de puissance qui décrit l'offre et la demande dans le réseau électrique, et du grand nombre de flux d'énergie possibles, la valeur attendue combinant une énergie électrique ou une puissance électrique avec le paramètre de besoin de puissance, et le paramètre de besoin de puissance étant mis à la disposition du système photovoltaïque afin de commander une injection dans le réseau en fonction du besoin, le moyen (1120) de détermination étant conçu pour associer, à l'état de charge (122) du système de stockage (104) dans un intervalle de temps actuel, une valeur attendue qui correspond à une valeur attendue négative pour un intervalle de temps futur et le moyen (1120) de détermination étant conçu pour évaluer, deux fois, seulement le paramètre de besoin de puissance destiné à la charge de l'accumulateur depuis le réseau, afin de déterminer la valeur attendue ; et un moyen (1130) de sélection d'un flux d'énergie (114) parmi le grand nombre de flux d'énergie possibles (114) pour l'au moins un intervalle de temps actuel et/ou futur, la valeur attendue pour l'au moins un intervalle de temps actuel et/ou futur étant maximale, le flux d'énergie (114) déterminant la gestion opérationnelle à efficacité commandée.

7. Système photovoltaïque (100) comprenant un générateur solaire (102) et/ou un système de stockage (104) et/ou un système de gestion d'énergie (116) et un dispositif selon la revendication 6 pour optimiser la gestion opérationnelle pour le système de stockage (104) .

# Fig. 1

# Fig. 2

# Fig. 3a

# Fig. 3b

EP 3 072 202 B1

# Fig. 4

102  230  236  440  232

108

234  442  104  116

106

**Fig. 5a**

**Fig. 5b**

**Fig. 5c**

**Fig. 5d**

## Fig. 6

## Fig. 7

# Fig. 8

# Fig. 9

## Fig. 10

1000

1010

1020

1030

## Fig. 11

1110

1120

1130

1100

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010179704 A1

**In der Beschreibung aufgeführte Nicht-Patentliteratur**

- **A. U. SCHMIEGEL ; A. LINHART.** *Proceedings of the 16th Kassel symposium energy systems technology,* 2011